# EUROPEAN PATENT SPECIFICATION

(11) **EP 1 967 070 B1**
(45) Date of publication and mention of the grant of the patent: **27.06.2012**
(21) Application number: 08152401.9
(22) Date of filing: 06.03.2008
(51) Int. Cl.: A22B 5/00

(54) **Method and apparatus for automatically loosening a plucks set from a carcass**
Verfahren und Vorrichtung zur automatischen Lösung eines Geschlinges aus einem Schlachttierkörper
Procédé et appareil pour desserrer automatiquement un ensemble de fressure à partir d'une carcasse

(30) Priority: 06.03.2007 DK 200700339
(43) Date of publication of application: 10.09.2008
(73) Proprietor: Teknologisk Institut, 2630 Taastrup (DK)
(72) Inventor: Andersen, Peter, DK-3600, Frederikssund (DK); Andersen, Kjeld Neve, 2670 Greve (DK); Jensen, Carsten, DK-4000, Roskilde (DK)
(74) Representative: Rohde, Vibeke Warberg

(56) References cited:
- EP-A- 0 879 558
- EP-A- 1 245 155
- WO-A-2005/094593
- US-B1- 6 364 758

## Description

The present invention relates to a method and an apparatus for loosening a plucks set including tongue, larynx, heart, lungs, windpipe and gullet from a carcass. The method comprises steps of fixing said carcass by a region of the head by means of fixing means, applying a pulling force on the windpipe and gullet in a direction away from the spine, holding the plucks set at or near the larynx by means of holding means, cutting pharyngeal muscles and tissue loose from the carcass by means of pharynx cutting means and separating the tongue from the carcass.

Such a method and apparatus is known from the Applicant's co-pending patent application WO 2005/094593, which discloses cutting loose the pharyngeal muscles and tissue by means of a knife, holding the plucks set at or near the larynx by means of a clamping device and separating the tongue from the carcass by cutting. This method and apparatus, however, is inapplicable in an automated slaughter line as it presents a series of problems.

Firstly, regarding cutting the pharyngeal muscles and tissue loose from the carcass, a knife is introduced through the longitudinal incision in the abdomen, chest and throat of the carcass, and when the knife performs its cutting action, it is moved generally parallel to the palate of the carcass in a direction away from the carcass' hind legs (i.e. downwards, when the carcass is suspended from its hind legs hanging head down) with the cutting edge of the knife leading.

When cutting in the interior of the throat region, it is vital that cutting means do not come into contact with the palatine tonsils (tonsilla veli palatine), which are rich in bacteria, as this may cause contamination of the carcass, of the cutting means and possibly also of the following carcasses processed with the same apparatus. In addition, the cutting should be performed without hitting or damaging surrounding tissue or parts of the cranium or mandible. Particularly, damaging of the tongue should be avoided, as this will reduce its market value. To achieve this WO 2005/094593 suggests to position the knife by utilizing the choanae of the carcass (the choanae being the openings of the nasal cavity towards the windpipe), but experiments have later shown, that this does not yield a sufficient accuracy at typical processing speeds of one carcass every 8-10 seconds.

It is therefore an object of the present invention to provide a method and an apparatus, which allows the pharyngeal muscles and tissue to be loosened at typical processing speeds without causing contamination or unwanted damages.

Secondly, regarding the step of holding the plucks set, WO 2005/094593 describes holding the plucks set at or near the larynx by means of a clamping device. The clamping device comprises two curved members, which clamp around the windpipe and the gullet, the larynx or the connections between the larynx and the tongue in order to hold the plucks set and provide a pull on the windpipe, gullet and larynx. These curved members are moveable in relation each other, so as to widen and narrow the gap between them in order to free or hold the plucks set, respectively.

In practice however, it has turned out that the clamping device tends to squeeze or crush the larynx to an extent, where it becomes so damaged that it is easily torn during the subsequent processes. Furthermore, it has proven to be rather difficult to position the curved clamping members correctly relative to the larynx.

It is therefore another object of the invention to provide a method which allows the plucks set to be held in a reliable manner without causing unwanted damages thereto.

Thirdly, regarding the step of separating the tongue from the carcass, WO 2005/094593 mentions cutting along the two sides of the tongue in the region of the basihyoid bones and at the underside thereof (the term "underside" in this case meaning the part of the mandible that faces the ground, when the animal is standing on its feet). These cuts may be performed manually by means of a knife or automatically by means of a knife tool mounted in the apparatus.

Cutting loose the tongue manually is time consuming and hence disadvantageous owing to the high wages on manual labour. But more importantly the operator manually performing the cuts is forced to do repetitive movements, which are detrimental in the long term. It has therefore long been desired to provide an apparatus for performing this task, but none of the prior art machines have been able to provide the precision needed in order to reduce the quantity of meat remaining on the carcass after processing or to function at the desired processing speeds.

It is therefore yet another object of the invention to provide a method which allows the tongue to be cut loose from the mandible with sufficient precision and speed to function in an automated slaughter line.

It is thus the overall object of the present invention to provide a partially or fully automated method and apparatus for loosening a plucks set including heart, lungs and tongue from a carcass.

According to the invention this is achieved by a method, where the pharynx cutting means are introduced through the mouth of the carcass. Introducing the pharynx cutting means through the mouth enables a surprisingly precise positioning of the cutting means and the cut may be executed without the cutting means damaging the tonsils. Previously it was thought that contact between the apparatus and the alimentary canal including the mouth would lead to contamination, not only with bacteria but also with residual feedstuff. When developing the apparatus described in WO 2005/094593 it was therefore attempted to reach a design, where contact with the mouth and the inside of the gullet was kept at an absolute minimum. Recent experiments have, however, surprisingly refuted this fear.

In a preferred embodiment of the present invention, at least some of said fixing means are introduced into the mouth of the carcass and are brought into engagement with the inside of the oral cavity. This enables a good fixing of the head, particularly when combined with other means keeping the body of the carcass at rest, and the fixing means may in addition serve to guide the cutting means, as will be explained later.

The fixing means may advantageously comprise a palate engaging member and a mandible engaging member, which are moveable relative to each other, and which are adapted to be introduced through the mouth of the carcass and to be engaged in the mouth of the carcass, said palate engaging member engaging the palate and said mandible engaging member engaging the mandible. An example of such a mouth engaging fixing means is described in the Applicant's co-pending Danish patent application PA 2007 00339, from which priority is claimed.

With this construction where the two engaging members line both the upper and lower wall of the oral cavity, the fixing means may act as guiding means for the pharynx cutting means, hence increasing the precision of the cut and accordingly minimizing the risk of touching or damaging tonsils or getting stuck in more rigid parts of the palate, mandible or cranium. Tracks, recesses or projections may be provided for guiding the cutting means, but this may also be achieved by the engaging members being shaped appropriately.

In the preferred embodiment the pharynx cutting means is moveable in a direction of movement between a starting position and an end position and the pharynx cutting means comprises a curved cutting edge, which is located on an edge of a cylindrical sheet member, the generatrixes of which are parallel to the direction of movement of the pharynx cutting means. The cylindrical sheet member preferably has a directrix with a radius of curvature from 16 to 30 mm, preferably from 20 to 24 mm, for instance where the directrix is a circular arc of 150° to 210°, preferably 175° to 190°.

When oriented such that the curve of the cutting edge corresponds to the concave curvature of the soft palate, these cutting means is expedient in respect of avoiding damaging the tonsils and avoiding getting stuck in the palate or cranium while cutting loose the pharyngeal muscles and tissue. If making the knife from a piece of pipe with a circular cross section, which is processed appropriately, the rounded shape thus obtained further minimises the risk of the knife getting stuck or causing damage and additionally facilitates the guiding within the fixing means.

A pressing means may be used for forcing the part of the windpipe closest to the tongue against the cranium and a holding means may be used for holding the plucks set at or near the larynx, said pressing means having an engagement side for contacting said part of the windpipe and being moveable between a retracted rest position and an advanced active position, and holding means for holding the plucks set. The holding means may comprise piercing members moveable relative to said pressing means between a first, retracted position, in which they do not project over the engagement side of the pressing means, and a second, protruding position, in which they project over the engagement side of the pressing means for piercing the plucks set. The step of holding the plucks set at or near the larynx comprises piercing the epiglottis, the larynx and/or the windpipe between them with the holding means. In this way a reliable holding is achieved and the damages caused by the piercing is of no consequence, as the effected tissue is not regarded as saleable meat. The piercing may go all the way through or merely pierce the tissue partially, depending on what is sufficient to achieve a proper holding.

The previously experienced problems with the larynx being weakened by getting squeezed or crushed by the clamp are avoided when the plucks set is held by piercing.

The tissue, which may be pierced by spikes, contains relatively large amounts of cartilage. As the cartilage is elastic, it will give way to the spike and subsequently re-contract around the spike, leading to friction between the cartilage and the spike. The friction thus caused between the tissue and the spikes keeps the plucks set from falling off the spikes, even when it has been separated completely from the carcass. Retaining means arranged underneath the holding means are therefore not needed, but may be provided as a safety device.

A tongue loosening means may be used for the step of separating the tongue from the carcass, said tongue loosening means comprising scraping means scraping the edges of the body of the mandible facing away from the cranium to thereby weaken or break connections between the tongue and the mandible, said scraping means being moveable between a first position and a second position, the distance between these two positions corresponding substantially to the length of the body of the mandible.

It has previously been tried to simply rip out the tongue of the carcass after the basihyoid bones have been cut. However, the connections, such as tendons and membrane tissue, connecting the sides of the tongue to the mandible have proven to be too strong to tear, resulting in damages to the tongue, which renders it unsalable. In other cases the connection between the tongue and the larynx has been torn, so that the tongue was left within the carcass and had to be removed manually. By scraping the bodies of the mandible, however, the connections between mandible and tongue are sufficiently weakened so that the tongue can subsequently be pulled out of the carcass without being damaged. The pull is achieved by retracting the holding means possibly in combination with pulling on the plucks set in the vicinity of the heart and lungs. The use of the combination is preferred as the application of the necessary force is then distributed.

Inherent to the process, the quantity of meat remaining on the carcass after processing is minimized as much of the connective tissue is removed together with the tongue.

Moreover, the scraping process is less time consuming than cutting, whether by machine or by hand.

In comparison to the manual cutting, scraping is advantageous in that the process to a large extend can be automated or can form part of a series of automated processes, thus sparing the operator from detrimental repetitive movements.

The mandible scraping means may advantageously comprise at least one scraping edge adapted for abutting an edge of the body of the mandible substantially facing away from the cranium of the carcass. Scraping this particular region of the mandible of the carcass facilitates the above-described weakening of the connection between the tongue sides and the mandible.

For optimum precision in the scraping process, said scraping means may comprise at least one scraper having a protrusion extending in a direction substantially perpendicular to said scraping edge, said protrusion comprising a contact edge adapted for abutting an edge of the body of the mandible substantially facing away from a vertical median plane in the carcass, said contact edge meeting said scraping edge in a non-acute angle. The protrusion serves as a guiding means preventing the scarping means from moving inwards towards the centre plane of the symmetry plane of the mandible and cranium.

The contact edge may be sharpened to serve as a second scraping edge, which facilitate the above-described weakening of the connection between tongue sides and mandible. This, however, necessitates that the jowl has been loosened in advance.

The scrapers may be resiliently suspended. This enables the scraping means to automatically adapt to the contours of the mandible, thus providing a thorough scraping close to the mandible.

The scraping of the two mandible sides may in principle be performed with one and the same scraping means, but it is preferred to use two scrapers, which are substantially mirror-imaged and forced towards each other by suitable means such as hydraulic cylinders or the like. In this way the forces affecting the carcass is kept substantially at equilibrium.

Cutting means, such as e.g. a circular cutter, adapted for loosening the tongue of the carcass from the carcass in the region of the basihyoid bones, and positioning means for positioning said cutting means relative to the mandible of the carcass may furthermore be used.

In the following, the present invention will be explained in more detail by way of example, based on the embodiments and examples shown in the drawing, where
Fig. 1 is a sketch (not drawn to scale) seen from the side of an apparatus for loosening a plucks set from a pig carcass hung from its hind legs with the plucks set held by a holding device,
Fig. 2 is a side view of an example of pressing means, holding means and dilating members,
Fig. 2a is a representation of the contents of fig. 2 as line drawing,
Fig. 3 is a perspective view of the example of the pressing means, holding means and dilating members according to Figs 2 and 2a,
Fig. 3a is a representation of the contents of fig. 3 as line drawing,
Fig. 4 is a schematic vertical cross section of a pig's head, illustrating inter alia the position of the pharynx cutting means of the apparatus relative to the tonsils of the carcass,
Fig. 5 is a perspective view of an example of scraping means,
Fig. 5a is a representation of the contents of fig. 5 as line drawing,
Fig. 6 is a perspective view of the example of the scraping means according to Figs 5 and 5a abutting the mandible of a carcass, and
Fig. 7 is a side view of the lowermost part of the carcass, where the meat has been partially removed in the region of the mandible.

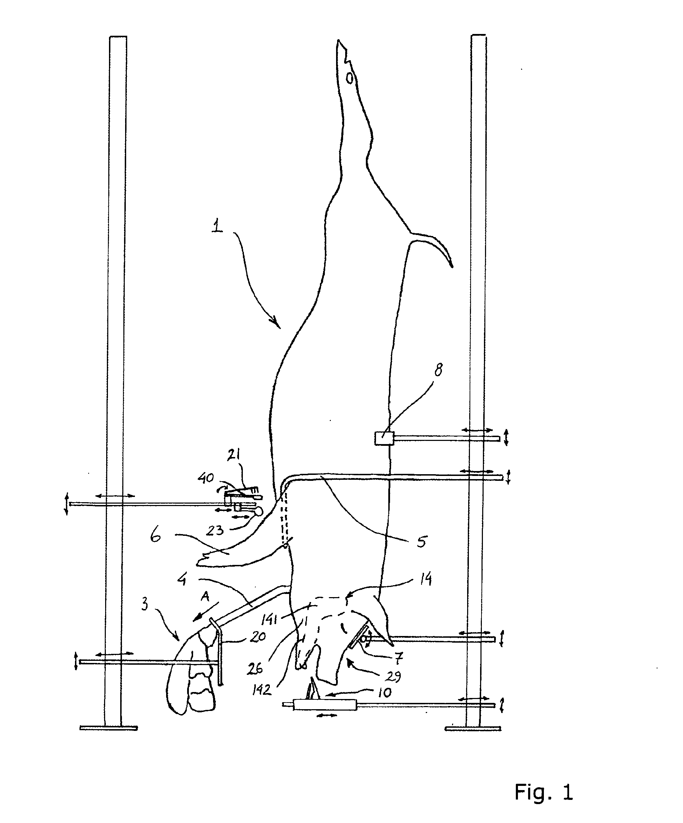

In the embodiment shown in Fig. 1, the apparatus is used on a pig carcass 1, suspended by the hind legs hanging head 29 down e.g. from a gambrel on an overhead conveyor (not shown). The abdominal cavity of the carcass has been cleared. Viscera and several of the internal organs have been removed so that only a plucks set 3 comprising heart and lungs is left, hanging by the windpipe and gullet 4 out through an incision in the throat, chest and abdomen. The apparatus may, however, also be used on carcasses where all or more of the internal organs and possibly the viscera are left in the plucks set.

The body of the carcass 1 is held by means of shackles 5 arranged around the forelegs 6. These shackles pull the carcass backwards so that its back is pressed against an abutment 8. The pull of the shackles on the forelegs causes the carcass to open at the incision in the abdomen, chest and throat. Further, the head 29 of the carcass is held in position by means of a vertically adjustable forehead or snout rest 7, which may automatically adjust to the anatomy of the carcass. Arrows on fig. 1 indicate suggested possibilities of movement, which may be achieved with any suitable means known to persons skilled in the art, such as hydraulic cylinders or chain drives (not shown).

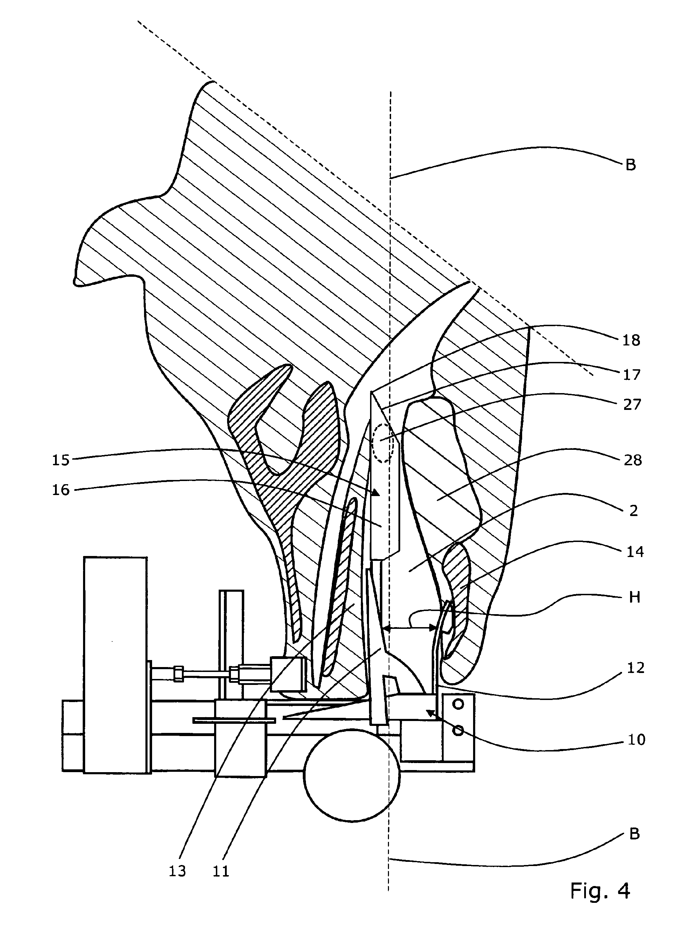

To hold the carcass 1, mouth engaging fixing means 10 are introduced through, and subsequently engaged in, the mouth 2 of the carcass as may be seen more clearly in Fig. 4. The mouth engaging fixing means 10 may be of the type described in the Applicant's co-pending Danish patent application PA 2007 00339. In the embodiment shown, the mouth engaging fixing means 10 comprise a palate engaging member 11 and a mandible engaging member 12. When engaging the mouth 2 of the carcass 1, the two engaging members 11, 12 are spread apart in the general direction denoted by the arrow H, causing said palate engaging member 11 to engage the palate 13, and said mandible engaging member 12 to engage the mandible 14. Apart from fixing the carcass 1, this also keeps the tongue 28 and palate 13 away from the path traversed by the pharynx cutting means 15, as will be discussed later. Considerable force is required to open the mouth of the carcass in this way and this force provides the desired fixing of the carcass.

Referring again to Fig. 1, a holding device 20 exerts a pull on the windpipe and the gullet 4 away from the carcass 1 as indicated by the arrow A. The pull of the holding device 20 causes part of the membranes and connective tissue connecting the windpipe and gullet 4 to the interior of the carcass 1 to be torn and the remaining to be stretched, thereby making room from the abdominal cavity all the way down to the larynx (not visible in Fig. 1).

The holding device 20 could be of any suitable type, for instance the one described in WO 2005/094593, which is a holding device comprising two plate-like holding members, which are moveable between a first position, wherein the heart and lungs are allowed to pass between them, and a second position, wherein only the windpipe and gullet 4 are allowed to pass. By arranging these plate-like holding members in the second position and pulling them away from the carcass, the holding device is thus able to exert a pull on the windpipe and gullet.

Another example of a holding device 20 functioning in a similar way is known from the Applicant's Danish patent DK 173879, which describes a holding device to be brought around the windpipe and gullet to thereby arrange them in a slot in the holding device.

Alternatively, it is conceivable that the holding device 20 is simply a hook shaped element adapted to catch and retain the windpipe and gullet 4 in proximity of the heart and lungs.

Regardless of the holding device used, care should be taken not to apply excessive force, as this might cause the windpipe and gullet 4 to break, typically between larynx and lungs.

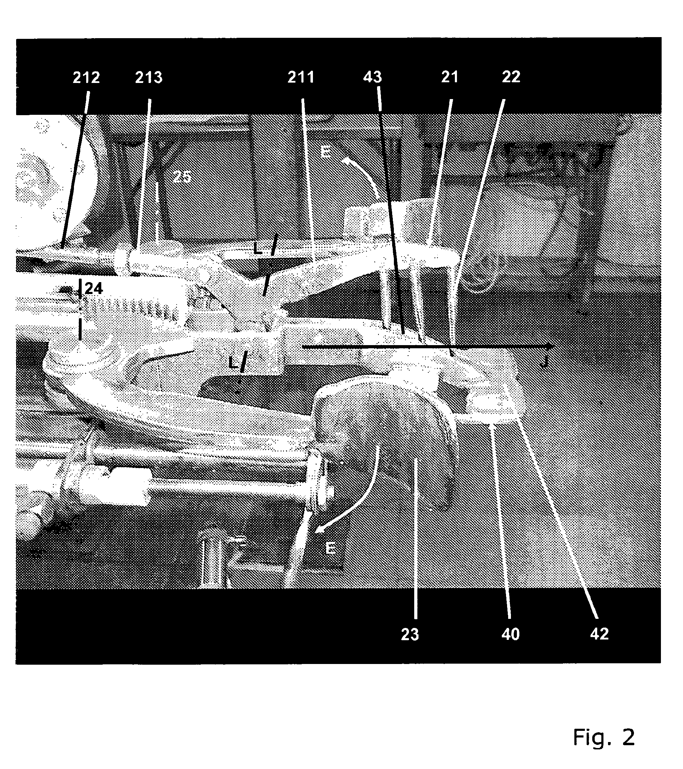

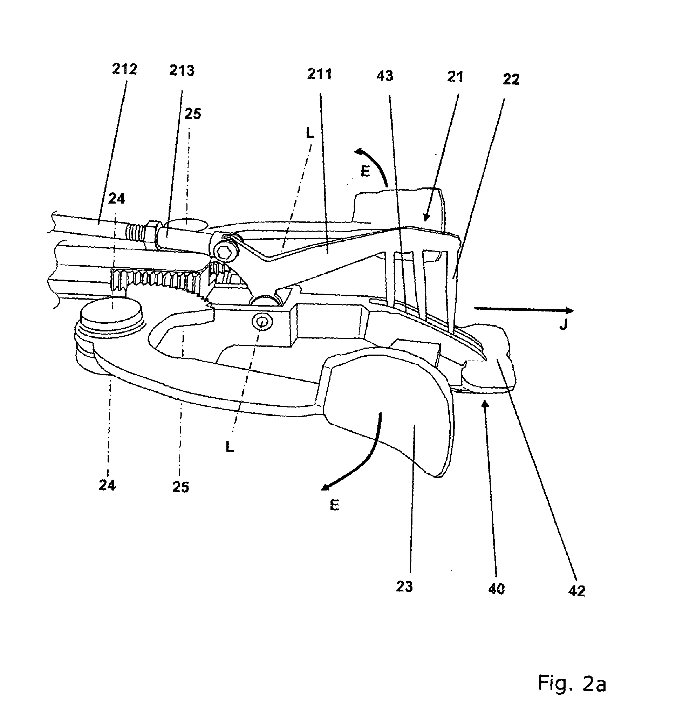

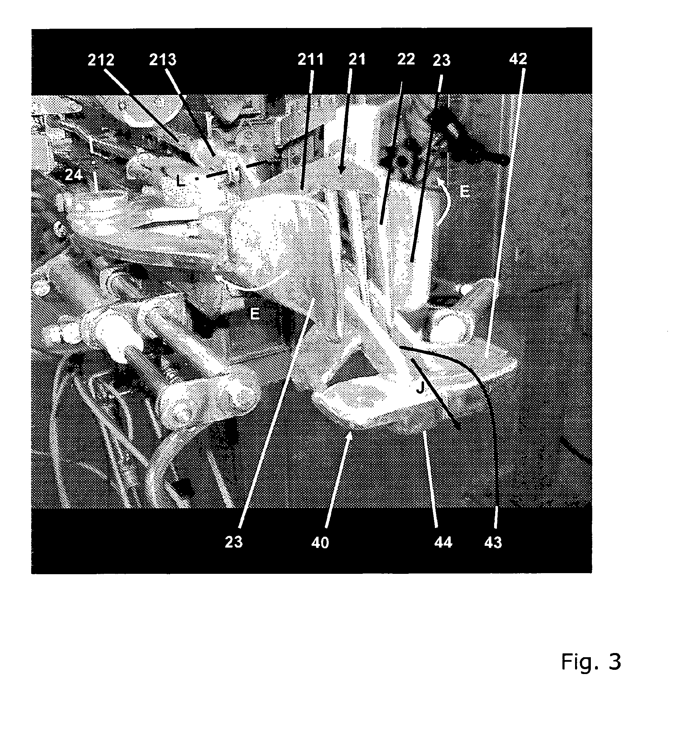

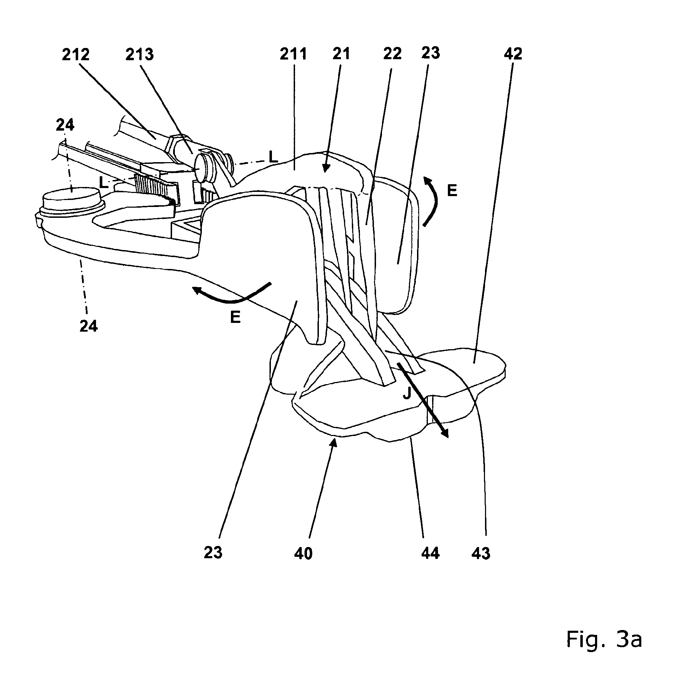

To make room for the cutting of the pharyngeal muscles and tissue and keep the windpipe, gullet etc. in place, a pressing means in the form of a thrust pad 40 as shown in Figs 2, 2a, 3 and 3a is inserted through the incision in the abdomen, chest and throat. While maintaining a pull exerted by the holding device 20 on the windpipe and gullet, the thrust pad 40 is forced inwards towards the spine and downwards towards the head so that an engagement side 44 of the thrust pad is forced against the exposed side of the larynx. This causes the windpipe and gullet to be clamped between the thrust pad 40 and the cranium. In addition, it may contribute to breaking at least some of the membranes and connective tissue, if any, still connecting the windpipe, gullet and larynx to the inside of the carcass.

The movement of the thrust pad 40 is continued until it comes into a firm direct or indirect abutment against one or more parts of the inside of the head 29 of the carcass 1, e.g. against the mandible 14 or against processus paracondylaris, which is located on the cranium close to its connection to the spine.

The details of the thrust pad 40 may be of any suitable design, such as described for instance in WO 2005/094593, so as to ensure good contact with the tissue and bone inside the pig head and to also be adaptable for the use of the invention on other species of animal, such as cattle. When the thrust pad 40 is in its end position, it contributes considerably to the fixing of the head.

Still referring to Figs 2, 2a, 3 and 3a, a holding means 21 comprise three spikes 22, each measuring approximately 4 mm in diameter. The spikes 22 are pointing in a direction substantially transverse to the direction of movement J of the thrust pad 40 during insertion thereof and are distributed along a line parallel to this direction J.

Here, only the use of relatively long spikes is described in detail, but it is to be understood that other piercing means may also be used, such as serrated elements.

Tests have proven, that three spikes 22 of approximately the above-mentioned dimensions are be suitable for ensuring a proper holding of the plucks set without weakening it too much, so that a pull can still be exerted thereon.

In order to hold the plucks set relative to the thrust pad 40, the holding means 21 are moved from a first position, depicted in Figs 2, 2a, 3 and 3a, where it is located opposite the engagement side of the thrust pad 40, to a second position (not shown), in which the holding means 21 project below the thrust pad to thereby pierce and fix the epiglottis, the larynx and/or the windpipe between them relative to the thrust pad 40. This movement is achieved by rotating the arm 211, on which the spikes 22 are formed, about the axis L. This rotation may be brought about by a piston rod 212 pushing on a second arm 213, but other means will be evident to persons skilled in the art. Similarly, it will be evident, that the movement of the spikes 22 may also be achieved by a displacement along a substantially vertical axis.

An oblong aperture 43 in the thrust pad 40 is adapted to allow the spikes 22 to pass, but a number of smaller apertures corresponding in number to the number of spikes may also be employed. These aperture(s) 43 may act as guiding means for the spikes 22.

Other arrangements and numbers of spikes are of course conceivable. For instance, instead of three spikes 22, there may be ten thinner spikes in one or more rows or other patterns, which may result in an equivalent holding effect. Such a configuration is, however, less preferred, as it will be harder to clean.

Arranging the spikes 22 along a line, which is substantially parallel to the longitudinal direction of the windpipe has the advantage that the weakening caused by the piercing of the tissue is distributed over several sections of the windpipe. If the spikes are instead arranged in a row that extends perpendicularly to the windpipe, the weakening caused by each of the spikes will affect the same section of the windpipe and thus make it much more likely to tear. The gullet has been left out from these considerations as it has virtually no strength or resistance to tearing in comparison with the windpipe.

A reliable holding of the pluck set may be achieved with the thrust pad 40 and holding means 21 in cooperation. When the spikes 22 are piercing the larynx, epiglottis or the portion of the windpipe connecting these, the cartilageous tissue in these organs will fit so tightly on the spikes that the plucks set is retained on the spikes by friction. Other means of retaining the plucks set such as shackles arranged underneath the thrust pad may, however, also be employed.

In order to improve the conditions of access to the interior of the carcass 1, dilating means, such as the pair of spoon-like dilating members 23 shown in Figs 2, 2a, 3 and 3a, contacts the tissue on the two sides of the incision in the carcass in a manner known from WO 2005/094593 as well as from WO2006/102897.

When introduced into the carcass 1 the dilating members 23 are substantially parallel, and when they are in place within the carcass they are spread apart as indicated by the arrows E in Figs 2, 2a, 3 and 3a, the dilating members 23 pivoting around axes 24 and 25 as described in the WO-publications mentioned above.

In the example shown, the thrust pad 40, holding means 21 and dilating device 23 are integrated, but three separate devices are conceivable.

At this point it may be beneficial, but not strictly necessary, to cut loose the jowls 26 (Fig. 1) of the carcass 1, i.e. to detach the meat from the cheeks and the outside of the mandible 14 of the carcass. This cutting can be performed with an apparatus (not shown) as described in the Applicant's International patent application WO 2006/102897.

The thrust pad 40 with the holding means 21 in their second, holding position, are then pulled away from the carcass 1 in order to further loosen the plucks set 3 from the carcass, the unit consisting of the thrust pad and the holding means functioning as a plucks set extraction device. In order not to tear or damage the windpipe, gullet or larynx, the pull is carried out with variable force, the initial pulling force being greater than the subsequent pulling force. Tests have shown that a pulling force of approximately 700 N during the initial pull over a distance of approximately 125 mm, and a pulling force of approximately 350 N during a subsequent pull over a distance of approximately 80 mm may be appropriate.

Now, while still exerting a pull on the windpipe and gullet 4, a cutting tool 15 is advanced into the mouth 2 of the carcass 1 as illustrated in Fig. 4. The mouth engaging fixing means 10 act as guiding means for the cutting tool 15, hence increasing the precision of the cut and accordingly minimizing the risk of touching or damaging especially the tonsils 27, but also palate 13, tongue 28, mandible 14 or cranium of the carcass 1.

In the embodiment depicted in Fig. 4, the pharynx cutting tool 15 is a knife comprising an elongated main part 16, an inclined leading edge 17 and a cutting edge 18 (not clearly discernible) along at least a part of the leading edge 17. The elongated main part 16 including the inclined leading edge 17 and the cutting edge 18 are curved around an axis B being substantially parallel to the longitudinal direction of the elongated main part 16, the cutting edge covering approximately 1/3 of the end edge. Hence, the knife may be manufactured from a cylindrical sheet, such as a split pipe, which is cut in an inclined angle relative to the longitudinal direction of the pipe and subsequently sharpened along at least a part of the inclined cut.

The tonsils 27, which should never be touched by the knife, is located in the tissue interconnecting the sides of the tongue 28 and the soft palate, thus forming a pipe-like structure. The cut to be made is located adjacent to the soft palate with very little room to manoeuvre in. The above design of the knife 15 is expedient as it renders possible cutting between the tonsils 27 and the soft palate so that the tonsils are cut loose from the soft palate. Particularly, the curvature in combination with the inclined leading edge 17 ensures that the tonsils 27 are not damaged.

The pluck set 3 including tongue 28 has now been cut partially loose from the carcass 1, but to separate it completely from the carcass 1, the tongue 28 must also be loosened along its sides 36.

Loosening the tongue 28 in the region of the basihyoid bones is preferably done by cutting. As described in WO 2005/094593 this can be done with a circular cutter and positioning means for positioning the circular cutter relative to the mandible 14 of the carcass 1.

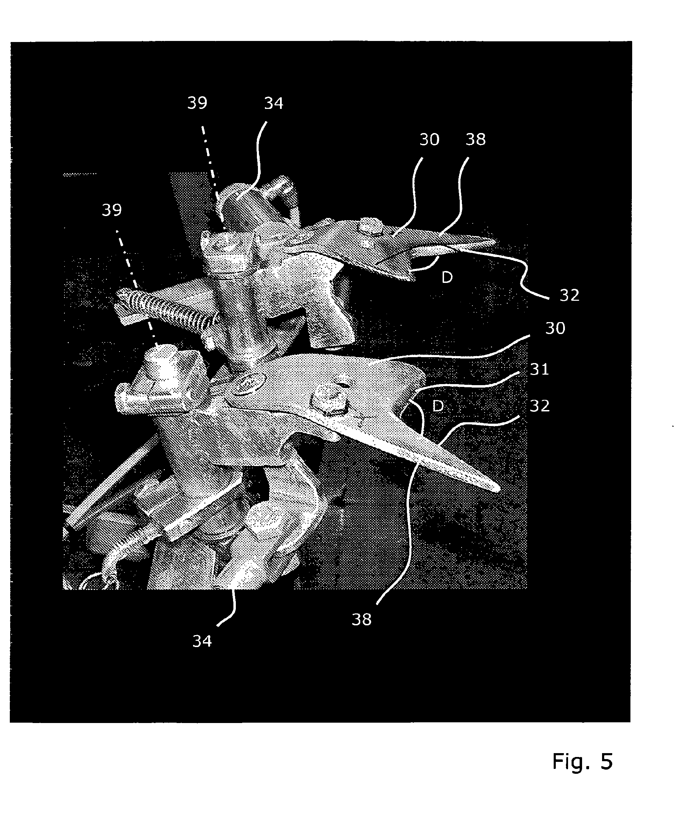

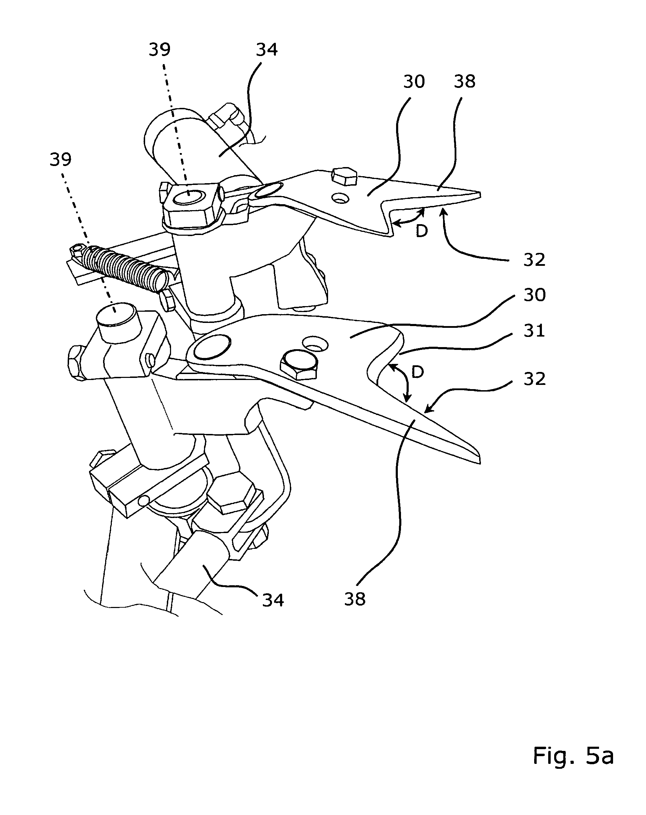

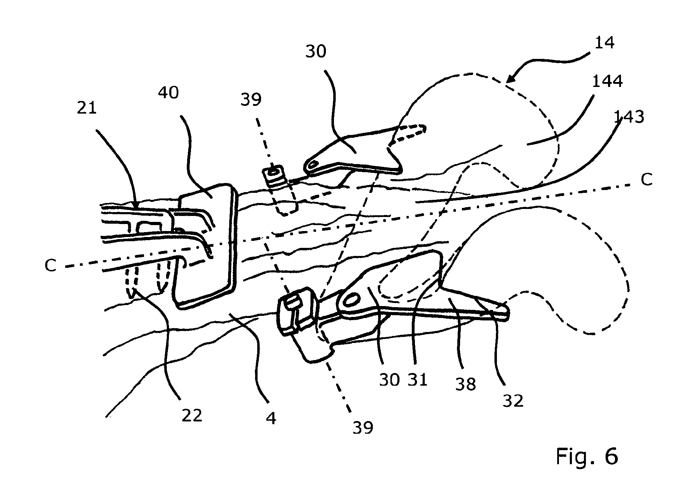

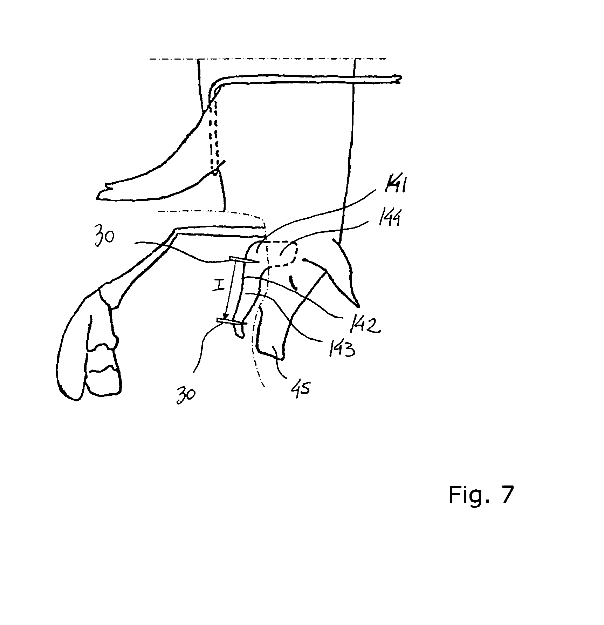

In order to weaken the connections between the sides 36 of the tongue 28 and the mandible 14, scrapers 30, such as those depicted in Figs 5, 5a and 6, scrape along the mandible. Two similar, mirror-inverted scrapers 30 each comprising a base part, a leading edge comprising a scraping edge 31 and a protrusion 38 comprising a contact edge 32 may be used. As indicated in Fig. 7 the scraping edge 31 abuts the edge 142 of the body of the mandible 143 generally facing away from the cranium of the carcass 1, while the contact edge 32 abuts the edge of the body of the mandible generally facing away from a vertical median plane C in the carcass 1. The scraping and contact edges 31, 32 meet each other in a non-acute angle D as is most clearly seen from Figs 5 and 5a, this angle corresponding to the shape of the mandible. This design provides a thorough and close scraping of the mandible 14. Also, the protrusion 38 assists in guiding the scraper 30 relative to the mandible.

The scrapers 30 are initially brought into engagement with the body 143 of the mandible (corpus mandibulae) immediately below the bend 141, where it meets the branch 144 of the mandible (ramus mandibulae), and are then moved downwards along the mandible as shown in Fig. 7 until reaching the point where its two bodies meet. During the downwards movement the scrapers are swung about respective axes 39 as indicated in Figs 5, 5a and 6 to thereby keep them in close contact with the mandible. This swinging may be activated mechanically or result from an appropriate spring loading of the scrapers. Here, the scraping is described as a downwards movement, i.e. towards the snout 45, but it is to be understood that it may also be upwards, i.e. away from the snout.

Scraping the edge 142 of the body 143 of the mandible generally facing away from the cranium (not shown) is of primary importance, whereas scraping the edge generally facing away from the vertical median plane C in the carcass 1 is clearly advantageous and preferred, but not strictly necessary depending on whether or not the jowls have been cut in advance.

The scrapers may also have a U-shape (not shown) presenting cutting edges on all three edges. This would, in addition to the two above-mentioned edges of the mandible 14, also enable a scraping of the part of the mandible 14 generally facing towards the vertical median plane C in the carcass 1. However, this is not preferred as U-shaped scrapers might damage the tongue 28 and will be highly sensitive to size variations between animals.

The scrapers 30 are arranged to abut the mandible 14 of the carcass 1 approximately in the position depicted in Fig. 6. As the scrapers 30 are moved downwards, i.e. generally in the direction denoted by I in Fig. 7, along the mandible, they are pressed against the above-mentioned edges of the mandible. The resilient suspension 33 ensures that the scrapers 30 are always in close contact with the mandible, thus providing a thorough and close scraping resulting in a proper weakening of the connections between the tongue sides 36 and mandible 14. The scraping may preferably be carried out with a scraping force along the mandible edge of approximately 1000 N together with a sufficient contact pressure, which has proven to yield good results relative to a proper weakening of the connections. Nevertheless, the scraping force should never be so big that damage is caused to the mandible 14.

By now retracting the thrust pad 40 including the holding means 21 still in its second position in which the plucks set is held, the tongue 28 is pulled from the weakened connections to the mandible 14, resulting in that the plucks set 3 including heart, lungs, windpipe and gullet 4, larynx and tongue 28, becomes completely detached from the carcass 1. Tests have shown that good results optimising the amount of meat recovered and minimising damage to the tongue 28 are obtained by moving the thrust pad 40 approximately 400 mm in a generally downwards direction, as indicated by the arrow F in Fig. 6, and 200 mm in a direction generally away from the cranium (not visible), the direction being indicated by the arrow G in Fig. 6, with a pulling force of up to approximately 1000 N.

The plucks set 3, which is now completely detached from the carcass 1, is now hanging from the thrust pad 40 and is held in place by the holding means 21 and holding device 20.

Receiving means (not shown) may now be introduced below the plucks set 3. The receiving means may for example be in shape of an arm with an indented or curved portion for receiving the plucks set 3. The plucks set can then be released from the thrust pad 40, holding means 21 and holding device 20 by removing the holding device 20 and retracting the spikes 22 to their first, inactive position, resulting in the plucks set falling onto the receiving means. When the spikes 22 are pulled back through the aperture 43 in the thrust pad 40, the spikes comes out of the pierced tissue. This way of releasing the plucks set from the apparatus is of course only an example; other manners in which to carry out the operation are conceivable. For example the receiving means may simply be a tray into which the plucks set is dropped when being released.

Above, the invention has been described for use in relation to a pig carcass hung by the hind legs, head down. It is, however, to be understood, that the invention may also be used for the processing of other types of carcasses, for instance cattle and that the carcass may be oriented differently, e.g. lying down. Indications of size, force and direction given in the above should then be adjusted accordingly.

Furthermore, pneumatic or hydraulic cylinders or other driving devices may be used for moving the tools, devices, knifes etc. mentioned above as will be evident to persons skilled in the art. A control device may control the operation of these driving devices, so that a processing program resulting in the above functions for loosening the plucks set may be carried out for each carcass.

Additionally, it is to be understood that different features of the embodiments shown may be left out or combined in a number of other ways than have been described above without causing such embodiments to fall outside the scope of the claims.

## Claims

1. A method for loosening a plucks set (3) including tongue (28), larynx, heart, lungs, windpipe and gullet (4) from a carcass (1) comprising spine and head (29) with mouth (2), cranium, mandible (14) and palate (13), said method comprising steps of:
- fixing said carcass (1) by a region of the head (29) by means of fixing means (10),
- applying a pulling force on the windpipe and gullet (4) in a direction away from the spine,
- holding the plucks set (3) at or near the larynx by means of holding means (21),
- cutting pharyngeal muscles and tissue loose from the carcass (1) by means of pharynx cutting means (15),
- separating the tongue (28) from the carcass (1),
**characterized in that** said pharynx cutting means (15) are introduced through the mouth (2) of the carcass (1).

2. A method according to claim 1, wherein at least some of said fixing means (10) are introduced into the mouth (2) of the carcass (1) and are brought into engagement with the inside of the oral cavity.

3. A method according to claim 1 or 2, wherein said step of holding the plucks set (3) at or near the larynx comprises piercing the epiglottis, the larynx and/or the windpipe between them with the holding means (21).

4. A method according to any of the claims 1 to 3, wherein said step of separating the tongue (28) from the carcass (1) comprises scraping the edges of the body of the mandible (14) facing away from the cranium by means of scraping means to thereby weaken or break connections between the tongue (28) and the mandible (14).

5. An apparatus for loosening a plucks set (3) including tongue (28), larynx, heart, lungs, windpipe and gullet (4) from a carcass (1) comprising spine and head (29) with mouth (2), cranium, mandible (14) and palate (13), said apparatus comprising fixing means (10) for fixing said carcass (1) by a region of the head (29) and a pharynx cutting means (15) for cutting the pharyngeal muscles and tissue loose from the carcass (1),
**characterized in that** said pharynx cutting means (15) are adapted to be introduced through the mouth (2) of the carcass (1).

6. An apparatus according to claim 5, wherein said pharynx cutting means (15) is moveable in a direction of movement and where the pharynx cutting means (15) comprises a curved cutting edge (18), which is located on an edge (17) of a cylindrical sheet member (16), the generatrixes of which are parallel to the direction of movement of the pharynx cutting means (15).

7. An apparatus according to claim 6, wherein said cylindrical sheet member (16) has a directrix with a radius of curvature from 16 to 30 mm, preferably from 20 to 24 mm.

8. An apparatus according to claim 7, wherein said directrix is a circular arc of 150° to 210°, preferably 175° to 190°.

9. An apparatus according to any of claims 5-8, wherein the fixing means (10) comprises a palate engaging member (11) and a mandible engaging member (12), which are moveable relative to each other, and which are adapted to be introduced through the mouth (2) of the carcass (1) and to be brought into engagement with the inside of the oral cavity by being moved relative to each other, and where the pharynx cutting means (15) is guided in its movement by the fixing means (10).

## Patentansprüche

1. Verfahren zum Lösen eines Geschlinges (3) umfassend Zunge (28), Kehlkopf, Herz, Lungen, Luftröhre und Speiseröhre (4) aus einem Schlachttierkörper (1), umfassend Wirbelsäule und Kopf (29) mit Maul (2), Schädel, Kiefer (14) und Gaumen (13), wobei das Verfahren folgende Schritte umfasst:
- Befestigen des Schlachttierkörpers (1) an einem Bereich des Kopfes (29) mittels Befestigungsmitteln (10),
- Anwenden einer Zugkraft an der Luftröhre und Speiseröhre (4) in einer Richtung weg von der Wirbelsäule,
- Halten des Geschlinges (3) mittels Haltemitteln (21) an oder nahe bei dem Kehlkopf,
- Losschneiden von Rachenmuskeln und -gewebe aus dem Schlachttierkörper (1) mittels Rachenschneidmitteln (15),
- Heraustrennen der Zunge (28) aus dem Schlachttierkörper (1),
**dadurch gekennzeichnet, dass** die Rachenschneidmittel (15) durch das Maul (2) des Schlachttierkörpers (1) eingeführt werden.

2. Verfahren nach Anspruch 1, wobei mindestens einige der Befestigungsmittel (10) in das Maul (2) des Schlachttierkörpers (1) eingeführt werden und in Anschlag mit der Innenseite der Maulhöhle gebracht werden.

3. Verfahren nach Anspruch 1 oder 2, wobei der Schritt des Haltens des Geschlinges (3) an oder nahe dem Rachen das Durchstechen des Kehldeckels, des Rachens und/oder der Luftröhre zwischen ihnen mit den Haltemitteln (21) umfasst.

4. Verfahren nach einem der Ansprüche 1 bis 3, wobei der Schritt des Heraustrennens der Zunge (28) aus dem Schlachttierkörper (1) das Schaben der Ränder des Körpers des Kiefers (14), die vom Schädel abgewandt sind, mittels Schabemitteln umfasst, um **dadurch** Verbindungen zwischen der Zunge (28) und dem Kiefer (14) zu schwächen oder zu trennen.

5. Vorrichtung zum Lösen eines Geschlinges (3) umfassend Zunge (28), Kehlkopf, Herz, Lungen, Luftröhre und Speiseröhre (4) aus einem Schlachttierkörper (1), umfassend Wirbelsäule und Kopf (29) mit Maul (2), Schädel, Kiefer (14) und Gaumen (13), wobei die Vorrichtung Befestigungsmittel (10) zum Befestigen des Schlachttierkörpers (1) an einem Bereich des Kopfes (29) und Rachenschneidmittel (15) zum Losschneiden von Rachenmuskeln und -gewebe aus dem Schlachttierkörper umfasst,
**dadurch gekennzeichnet, dass** die Rachenschneidmittel (15) eingerichtet sind, um durch das Maul (2) des Schlachttierkörpers (1) eingeführt zu werden.

6. Vorrichtung nach Anspruch 5, wobei die Rachenschneidmittel (15) in einer Bewegungsrichtung beweglich sind und wobei die Rachenschneidmittel (15) einen gekrümmten Schneidrand (18) umfassen, der sich an einem Rand (17) eines zylindrischen Plattenelements (16) befindet, dessen Erzeugende (Generatrixen) parallel zur Bewegungsrichtung des Rachenschneidmittels (15) sind.

7. Vorrichtung nach Anspruch 6, wobei das zylindrische Plattenelement (16) eine Leitlinie (Direktrix) mit einem Krümmungsradius von 16 bis 30 mm, vorzugsweise von 20 bis 24 mm, aufweist.

8. Vorrichtung nach Anspruch 7, wobei die Leitlinie (Direktrix) ein Kreisbogen von 150° bis 210°, vorzugsweise 175° bis 190°, ist.

9. Vorrichtung nach einem der Ansprüche 5-8, wobei die Befestigungsmittel (10) ein Gaumeneingriffelement (11) und ein Kiefereingriffelement (12) umfassen, die relativ zueinander beweglich sind und die eingerichtet sind, um durch das Maul (2) des Schlachttierkörpers eingeführt und in Eingriff mit der Innenseite der Maulhöhle gebracht zu werden, indem sie relativ zueinander bewegt werden, und wobei die Rachenschneidmittel (15) in ihrer Bewegung durch die Befestigungsmittel (10) geführt werden.

## Revendications

1. Procédé destiné à desserrer un ensemble de fressure (3) comprenant la langue (28), le larynx, le coeur, les poumons, la trachée et l'oesophage (4) d'une carcasse (1) comprenant la colonne vertébrale et la tête (29) avec la bouche (2), le crâne, le maxillaire inférieur (14) et le palais (13), ledit procédé comprenant les étapes consistant à :
fixer ladite carcasse (1) par une région de la tête (29) à l'aide de moyens de fixation (10),
appliquer une force de traction sur la trachée et l'oesophage (4) dans une direction opposée à la colonne vertébrale,
maintenir l'ensemble de fressure (3) au niveau du larynx ou à proximité de celui-ci, à l'aide de moyens de support (21),
détacher par découpe les muscles et le tissu pharyngés de la carcasse (1) à l'aide de moyens de coupe de pharynx (15),
séparer la langue (28) de la carcasse (1),
**caractérisé en ce que** lesdits moyens de coupe de pharynx (15) sont introduits par la bouche (2) de la carcasse (1).

2. Procédé selon la revendication 1, dans lequel au moins certains desdits moyens de fixation (10) sont introduits dans la bouche (2) de la carcasse (1) et sont amenés en mise en prise avec l'intérieur de la cavité buccale.

3. Procédé selon la revendication 1 ou 2, dans lequel ladite étape consistant à maintenir l'ensemble de fressure (3) au niveau du larynx ou à proximité de celui-ci, comprend l'étape consistant à percer l'épiglotte, le larynx et/ou la trachée entre eux, à l'aide de moyens de support (21).

4. Procédé selon l'une quelconque des revendications 1 à 3, dans lequel ladite étape consistant à séparer la langue (28) de la carcasse (1) comprend l'étape consistant à racler les bords du corps du maxillaire inférieur (14) opposés au crâne à l'aide de moyens de raclage, pour affaiblir ou rompre les connexions entre la langue (28) et le maxillaire inférieur (14).

5. Appareil destiné à desserrer un ensemble de fressure (3) comprenant la langue (28), le larynx, le coeur, les poumons, la trachée et l'oesophage (4) d'une carcasse (1) comprenant la colonne vertébrale et la tête (29) avec la bouche (2), le crâne, le maxillaire inférieur (14) et le palais (13), ledit appareil comprenant des moyens de fixation (10) pour fixer ladite carcasse (1) par une région de la tête (29) et des moyens de coupe de pharynx (15) pour détacher par découpe les muscles et le tissu pharyngés de la carcasse (1),
**caractérisé en ce que** lesdits moyens de coupe de pharynx (15) sont adaptés pour être introduits par la bouche (2) de la carcasse (1).

6. Appareil selon la revendication 5, dans lequel lesdits moyens de coupe de pharynx (15) sont mobiles dans une direction de mouvement, et dans lequel les moyens de coupe de pharynx (15) comprennent un bord de coupe incurvé (18) qui est positionné sur un bord (17) d'un élément de feuille cylindrique (16), dont les génératrices sont parallèles à la direction de mouvement des moyens de coupe de pharynx (15).

7. Appareil selon la revendication 6, dans lequel ledit élément de feuille cylindrique (16) a une directrice avec un rayon de courbure compris entre 16 et 30 mm, de préférence entre 20 et 24 mm.

8. Appareil selon la revendication 7, dans lequel ladite directrice est un arc circulaire de 150° à 210°, de préférence de 175° à 190°.

9. Appareil selon l'une quelconque des revendications 5 à 8, dans lequel les moyens de fixation (10) comprennent un élément de mise en prise de palais (11) et un élément de mise en prise de maxillaire inférieur (12) qui sont mobiles l'un par rapport à l'autre, et qui sont adaptés pour être introduits par la bouche (2) de la carcasse (1) et être amenés en mise en prise avec l'intérieur de la cavité buccale en étant déplacés l'un par rapport à l'autre, et dans lequel les moyens de coupe de pharynx (15) sont guidés dans leur mouvement par les moyens de fixation (10).
